# EUROPÄISCHE PATENTSCHRIFT

(11) **EP 0 537 186 B1**
(45) Veröffentlichungstag und Bekanntmachung des Hinweises auf die Patenterteilung: **21.09.1994**
(21) Anmeldenummer: 91910656.7
(22) Anmeldetag: 18.06.1991
(51) Int. Cl.: B32B 15/08, B65D 65/38

(54) **AUS EINEM FLÄCHENFÖRMIGEM MATERIAL GEFALTETER VERPACKUNGSBEHÄLTER**
PACKAGING CONTAINER FOLDED OF SHEET MATERIAL
RECIPIENT D'EMBALLAGE FORME PAR PLIAGE D'UN MATERIAU PLAT

(30) Priorität: 27.06.1990 DE 4020356
(43) Veröffentlichungstag der Anmeldung: 21.04.1993
(73) Patentinhaber: Pi-Patente Gesellschaft mit beschränkter Haftung (GmbH) Entwicklung und Verwertung, 35435 Wettenberg (DE)
(72) Erfinder: MEIXNER, Hans-Werner, D-6301 Wettenberg/OT Krofdorf-Gleiberg (DE)
(74) Vertreter: Knefel, Siegfried, Dipl.-Math.
(86) Internationale Anmeldenummer: EP9101125
(87) Internationale Veröffentlichungsnummer: WO9200190

(56) Entgegenhaltungen:
- EP-A- 0 196 721
- EP-A- 0 276 893
- DE-A- 2 830 717

## Beschreibung

Die Erfindung betrifft einen aus einem flächenförmigen Material bestehenden eigenstabilen Behälter.

Derartige Behälter bestehen üblicherweise aus Papier, welches geeignet bearbeitet worden ist, um flüssige oder breiige Lebensmittel nicht durch das Verpackungsmaterial hindurchtreten zu lassen oder schädlich zu beeinflussen. (EP-A 276 893). Die Ränder des ursprünglichen Papierbogens werden nach der Formgebung miteinander verklebt und zur Versteifung eingefaltet, so daß also beispielsweise ein Behälter in Quaderform entsteht, wie er von Milchtüten her bekannt ist. Das Papiermaterial läßt sich bei diesen Behältern schwer rückgewinnen, weil es durch die besondere Behandlung des Papieres mit schwer trennbaren Zusatzstoffen, zum Beispiel Aluminium, sehr fest verbunden ist. Derartige Behälter stellen eine Umweltbelastung dar, weil sie allenfalls durch Verbrennung vernichtet werden können, wobei jedoch Schadstoffe frei werden können.

Andere Behälter bestehen aus einem verzinnten Blech, das beispielsweise mit seinen Rändern, wie bei Dosen bekannt, verschweißt ist, so daß der Inhalt luftdicht abgeschlossen ist. Die Verzinnung dient dazu, ein Kosten des Bleches zu verhindern und/oder als Gleitmittel beim Tiefziehen und/oder Abstrecken. Sie läßt sich bei der Rohstoffrückgewinnung schwer trennen, so daß die Rückgewinnung der Rohstoffe unwirtschaftlich wird. Außerdem stellt die Verwendung eine Rohstoffvergeudung dar, weil Zinn ein weltweit knapper werdender Rohstoff ist. Vor allem aber ist die voluminöse geometrische Form der bekannten Dosen mechanisch schwer zerstörbar (nicht von Hand). Dies ist dadurch bedingt, daß Dosen nicht aus einem Materialstück gefaltet sind, sondern nach anderen Methoden hergestellt worden sind.
Andere Behälter in Form von Flaschen oder dergleichen eignen sich zwar für ein Recycling-Verfahren. Sie erfordern jedoch einen aufwendigen Rücktransport und besondere Reinigungsmaßnahmen, welche wiederum umweltverschmutzend sind. Außerdem sind Flaschen sehr anfällig gegen mechanische Beschädigung, so daß der Ausschuß relativ hoch ist. Eine andere Methode der Rückgewinnung ist der Rücktransport des Leergutes zu einer Glashütte, um das Glas einzuschmelzen. Der Rücktransport ist aufwendig, weil Flaschen ein sperriges Gut darstellen.

Aus der EP-A 196 271 ist es bekannt, eine Metallfolie beidseitig mit einer Kunststoffhaut zu überziehen, hierbei die Ränder der Kunststoffhaut überstehen zu lassen und miteinander zu verschweißen. Zwei derartige Bahnmaterialien werden gemäß der EP-A 196 271 aufeinandergelegt und an den Rändern miteinander verschweißt, so das ein Beutel entsteht, in den ein Pulver eingefüllt wird, das auch nach Schaffung eines Vakuums in dem Beutel diesen eine kissenförmige Gestalt behalten läßt.
Diese Beutel sind keine nach der Falttechnik hergestellten Verpackungsbehälter im Sinne der vorliegenden Erfindung, und sie geben auch keinen Hinweis darauf, einen eigenstabilen und wirtschaftlich recycelbaren Verpackungsbehälter zu schaffen.

Aufgabe der Erfindung ist es, einen eigenstabilen Verpackungsbehälter, insbesondere für Lebensmittel anzugeben, der überwiegend aus einem wiederverwendbaren Metall besteht, bei dem nach seinem bestimmungsgemäßen Gebrauch nach einer von Hand leicht und einfach durchführbaren Volumenverkleinerung der Rohstoff schadstoffarm und wirtschaftlich wiedergewonnen werden kann.

Diese Aufgabe wird durch das kennzeichnende Merkmal des Anspruches 1 gelöst.

Unter einem Blech wird zum Unterschied von einer Metallfolie verstanden, daß das Blech eine Eigenstabilität aufweist, eine Folie jedoch nicht.
Das Metallblech hat je nach Verwendungszweck eine Stärke im »m-Bereich, so daß es sich noch von Hand falten (knicken) läßt.

Die aufgebrachte Kunststoffhaut verhindert, daß das Blech rostet. Sie dient außerdem dazu, die Nähte des Behälters zu verschweißen. Das Falten des Ausgangsmaterials zu Behältern kann wie bei Papierbehältern erfolgen.

Im Gegensatz zu den bisherigen Dosen aus Blech hat der erfindungsgemäße Behälter den Vorteil, daß, wenn er leer ist, leicht von Hand flach zusammengedrückt werden kann, wonach er seine zusammengedrückte flache Form ohne besondere Maßnabmen behält, also nicht danach trachtet, sich wieder federnd auseinanderzudrücken. Weist der Behälter Laschen auf, werden diese vor dem Zusammendrücken des Behälters hochgebogen. In dieser Form läßt er sich in einem Container sammeln, und zwar kompakt sammeln, so daß sich ein Transport des Containers an den Weiterverarbeitungsort lohnt. Zur Vermeidung von Fehleinwürfen in den Container kann in diesem ein flacher Schlitz vorgesehen sein, um nur das verbrauchte zusammengedrückte Material aufzunehmen. Im Gegensatz zu Papierbehältern mit einem Zusatz von Aluminium und/oder Kunststoff ist der erfindungsgemäße Behälter leicht zu recyceln.

Der erfindungsgemäße Behälter hat den Vorteil, daß er sich wirtschaftlich recyceln läßt. Durch die Verwendung eines von Hand knickbaren Materials, kann der Verbraucher gegebenenfalls nach Abreißen und/oder Zurückknicken der Laschen den Behälter leicht flach zusammendrücken, wodurch der Behälter sein Volumen weitgehendst verliert. In dieser flach zusammengedrückten Form können die Behälter als kompaktes Paket gesammelt werden, indem sie beispielsweise durch einen Schlitz in einen Container geworfen werden. In dieser kompakten Form lohnt sich der Transport des Paketes aus gesammelten Behältern an den Recyclingort. Am Recyclingort können die angelieferten Behälterpakete so stark erhitzt werden, daß das Metall schmilzt und rückgewonnen wird, wobei der Kunststoff verbrennt und hierbei wegen der hohen Schmelztemperatur des Metalles außer CO₂ keine die Umwelt belastenden Schadstoffe beim Einschmelzen des Metalles abgibt. Das wiedergewonnene Metall kann erneut zu einem dünnen Blech ausgewalzt werden, anschließend mit Kunststoff überzogen werden, um zu einem neuen Behälter gefaltet zu werden.
Dieser Vorgang des Recycelns und der Neuformung von Behältern läßt sich beliebig oft wiederholen, was bei mit Kunststoff beschichteten Papierbehältern nicht der Fall ist.

Um das Recycling-Verfahren durchzuführen, werden die zusammengedrückten Behälter so weit erhitzt, daß das Metall schmilzt und der Kunststoff unter Wärmeabgabe verbrennt. Die freiwerdende Wärmeenergie kann weiterverwendet werden und ersetzt anteilig die zum Einschmelzen erforderliche Primärenergie für das Schmelzen des Metalles, wodurch sich auch der freiwerdende Gesamtanteil an CO₂ letztendlich nicht erhöht.

Wird versehentlich ein derartiger Behälter nach Gebrauch in den normalen Haushaltsmüll geworfen, so kann in der Müllsammelstelle das Verpackungsmaterial aussortiert werden, und zwar mit Hilfe eines Magneten, wenn das Metall als solches magnetisch ist.

Durch die aufgebrachte Kunststoffhaut ist das Metallblech als solches vollkommen eingeschlossen. Das Metallblech kann nicht rosten, jedenfalls so lange nicht, bis sich der Kunststoff von dem Metall löst. Dies ist erst nach geraumer Zeit der Fall. Das Metallblech kann nicht schädlich auf die Lebensmittel einwirken, sei es im Geschmack oder in der Haltbarkeit, weil die Kunststoffhaut eine Isolierschicht darstellt. Darüber hinaus wird ein Lichtdurchlas verhindert, wenn die Behälterwandung mit ihren Schichtmaterialien genügend dick ausgebildet ist.

Außerdem kann das Metall vor der Formung bedruckt werden, beispielsweise nach Art eines Zeitungsdruckes. Der Druck liegt dann unter der Kunststoffhaut, welche in diesem Fall transparent ist. Die Bedruckung ist deshalb kratz- und wischfest.
Anstelle des Bleches kann auch die Kunststoffhaut bedruckt werden.

Um den Inhalt eines mit Laschen versehenen Behälters entleeren zu können, kann, wie an sich bekannt, eine der Laschen hochgeknickt werden, um sie dann abzuschneiden, wodurch der Behälterinhalt zugänglich wird. In weiterer Ausgestaltung der Erfindung ist eine Perforation vorgesehen, längs der wenigstens eine der Laschen abgerissen werden kann.
Es kann aber auch, wie an sich bekannt, eine zum Beispiel mit einem Strohhalm durchstoßbare Öffnung vorgesehen sein, welche gemäß der Erfindung durch Materialverdünnung gebildet ist, beispielsweise des Metallbleches. Die vorgesehene Durchstoßstelle liegt vorteilhaft geschützt unter einer Lasche, welche zum Entleeren zurückgebogen wird.
Es kann aber auch von vornherein eine Öffnung in der Behälterwandung vorgesehen sein, welche mit einem abziehbaren Klebeband verschlossen ist.

Weitere Einzelheiten der Erfindung können den Unteransprüchen entnommen werden.

Auf der Zeichnung ist ein Ausführungsbeispiel der Erfindung dargestellt, und zwar zeigen:
- Fig. 1: die Draufsicht auf eine Verpackungsmaterialbahn;
- Fig. 2: einen Schnitt nach der Linie II-II der Fig. 1;
- Fig. 3: die Seitenansicht eines halbfertig geformten Behälters;
- Fig. 4: die Ansicht des Behälters der Fig. 3 in Richtung des Pfeiles IV in fertiger Form;
- Fig. 5: die Draufsicht auf den Behälter der Fig. 4 in Richtung des Pfeiles V;
- Fig. 6: einen nach dem Entleeren zusammengedrückten Behälter.

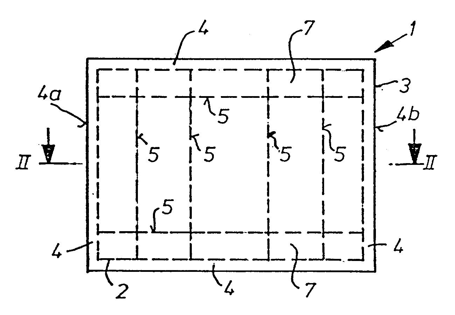

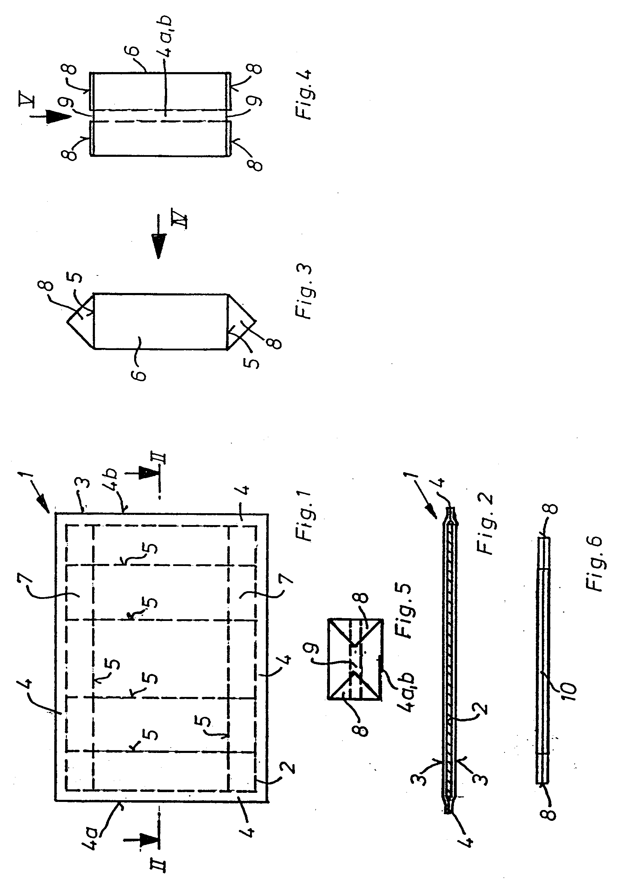

Gemäß Fig. 1 hat das Verpackungsmaterial (1) Rechteckform und liegt in einer Bahn aus. Es besteht gemäß den Fig. 1 und 2 aus einem reinen Metallblech (2), auf das allseitig ein Kunststoffüberzug (3) aufgebracht ist. Der Kunststoffüberzug (3) steht mit einem Rand (4) über die Ränder des Metallbleches (2) hinaus. Das Metall ist hierdurch gegen Rostbildung geschützt.

Zum Formen des Behälters wird das Verpackungsmaterial längs der Linien (5) geknickt, so daß in einem ersten Stadium ein Behälter (6), wie in Fig. 3 dargestellt, entsteht. Der obere und untere Streifen (7) des Verpackungsmaterials bildet teilweise den oberen und unteren Abschluß des Behälters (6), und der Überschuß des Materials ist zu Laschen (8) geformt.

Gemäß Fig. 4 sind die Laschen (8) eingeklappt. Sie können mit Hilfe der Kunststoffhaut an den eigentlichen Behälter (6) angeschweißt sein. Die Laschen liegen aber auch nach dem Einklappen aufgrund der Eigenschaft des Materiales ohne besondere Befestigung am Behälter an.

Die sich überdeckenden Innen- und Außenflächen der Ränder (4a und 4b) sind ebenfalls miteinander verschweißt.
Auch der obere und untere Rand (9) des Verpackungsmaterials liegen nach der Knickung übereinander und sind mit Hilfe der Kunststoffhaut verschweißt.

Der so geformte Behälter ist durch seine Herstellung durch Faltung, wodurch ein stabiles geometrisches Dreieck entsteht, äußerst stabil. Die Stabilität wird zusätzlich durch die verschweißten Ränder (9) und durch die eingebogenen und an den Behälter gelegten und gegebenenfalls geschweißten Laschen (8) erhöht. Die Stabilität wird weiterhin nach dem Einfüllen des Lebensmittels durch dieses unterstützt. Ist der Behälter leer, so kann er, wie in Fig. 6 dargestellt, in die Form (10) problemlos zusammengedrückt werden. Die angeschweißten Laschen werden hierzu vom Behälter falls erforderlich gelöst und anschließend zurückgefaltet. Dadurch wird das in dem Verpackungskörper enthaltene stabile geometrische Dreieck zerstört. Aufgrund der Biegeeigenschaften des Bleches (2) behält der Behälter ohne zurückzufedern seine zusammengedrückte Form.

Die früheren Laschen sind hierbei wieder mit (8) bezeichnet.

In der zusammengedrückten Form kann der Behälter durch den Schlitz eines Containers oder dergleichen geschoben werden, so daß sich in diesem eine kompakte Füllmenge einlagert, die für das Recycling-Verfahren dahingehend verwendet werden kann, daß bei Erhitzen das Metallblech schmilzt und zurückgewonnen werden kann, ohne besondere weitere Maßnahmen, da dieses überwiegend rein ist. Der Kunststoff ist bei dieser Temperatur ohne Rückstand verbrannt. Die Verbrennungswärme kann aufgefangen und genutzt werden. Es entweicht bei diesem Recycling-Verfahren lediglich CO₂ durch Verbrennung des Kunststoffes.

## Patentansprüche

1. Aus einem flächenförmigen Material gefalteter und an den Rändern verschweißter eigenstabiler Verpackungsbehälter,
**dadurch gekennzeichnet,** daß der Behälter aus einem von Hand leicht faltbaren (knickbaren) überwiegend reinem Metallblech (2) eines wiederverwendbaren Metalles besteht, das einen thermisch verschweißbaren Kunststoffüberzug (Kunststoffhaut (3)) aufweist, der beim Verbrennen bei einer Temperatur, die zum Schmelzen des Metalles erforderlich ist, keine außer CO₂ die Umwelt belastenden Schadstoffe freisetzt, und daß der Behälter mit Hilfe des Kunststoffes verschweißt ist.

2. Behälter nach Anspruch 1, dadurch gekennzeichnet, das der gefaltete Behälter eingebogene (eingeknickte) Laschen aufweist.

3. Behälter nach Anspruch 2, dadurch gekennzeichnet, daß die Laschen (8) an der Behälterwandung angeschweißt sind.

4. Behälter nach Anspruch 1, dadurch gekennzeichnet, daß das Metall oxydationsfähig ist.

5. Behälter nach Anspruch 1, dadurch gekennzeichnet, daß das Blech eine im »m-Bereich liegende Dicke aufweist.

6. Behälter nach Anspruch 1 für die Aufnahme von Lebensmitteln, gekennzeichnet durch die Verwendung eines lebensmittelechten Behältermaterials.

7. Behälter nach Anspruch 1, dadurch gekennzeichnet, daß das Behältermaterial gasdicht ist.

8. Behälter nach Anspruch 1, dadurch gekennzeichnet, daß das Behältermaterial flüssigkeitsdicht ist.

9. Behälter nach Anspruch 1, dadurch gekennzeichnet, daß das Metall eine Metallegierung ist.

10. Behälter nach Anspruch 9, dadurch gekennzeichnet, daß das Metall aus Eisen, Chromstahl, Chrom-Nickel-Stahl besteht.

11. Behälter nach Anspruch 1, dadurch gekennzeichnet, daß das Metall magnetisch ist.

12. Behälter nach Anspruch 1, dadurch gekennzeichnet, daß als Kunststoff ein Polyolefin dient.

13. Behälter nach Anspruch 1, dadurch gekennzeichnet, daß als Kunststoff ein auf der Basis von Äthylen-Acrylsäure bestehender Kunststoff dient.

14. Behälter nach Anspruch 1, dadurch gekennzeichnet, daß der Kunststoffüberzug (3) ohne Haftvermittler fest mit dem Metallblech (2) verbunden ist, so daß bei Erhitzen des Materials zum Einschmelzen des Metalles außer CO₂ keine umweltschädlichen Gase entweichen.

15. Behälter nach Anspruch 1, dadurch gekennzeichnet, daß der Kunststoffüberzug (3) das Metallblech in der Ausgangsform für die Behälterbildung beidseitig, einschließlich der Außenränder bedeckt.

16. Behälter nach Anspruch 15, dadurch gekennzeichnet, daß der Kunststoffüberzug (3) an den Außenrändern des Metallbleches lappenförmig übersteht.

17. Behälter nach Anspruch 1, dadurch gekennzeichnet, daß das bei der Bildung des Behälters sich überlappende Behältermaterial thermisch oder hochfrequent innen und/oder außen verschweißt ist.

18. Behälter nach Anspruch 1, dadurch gekennzeichnet, daß das im Kunststoffüberzug liegende Behälterblech (2) bedruckt ist, und daß der Kunststoffüberzug (3) transparent ist.

19. Behälter nach Anspruch 1, dadurch gekennzeichnet, daß der Kunststoffüberzug transparent und bedruckt ist.

20. Behälter nach Anspruch 19, dadurch gekennzeichnet, daß der Kunststoffüberzug transparent und von innen bedruckt ist.

21. Behälter nach Anspruch 2, dadurch gekennzeichnet, daß eine der Laschen eine Perforation aufweist.

22. Behälter nach Anspruch 1 und 2, dadurch gekennzeichnet, daß durch Materialverdünnung in der Wandung des Behälters eine durchstechbare Stelle vorgesehen ist, zwecks Entleerung des Behälters, und daß die verdünnte Stelle unter einer eingeknickten Lasche des Behälters liegt.

23. Behälter nach Anspruch 1, dadurch gekennzeichnet, daß in der Behälterwandung eine Öffnung vorgesehen ist, welche mit einem abziehbaren Materialstreifen verschlossen ist.

## Claims

1. Intrinsically stable packaging container folded of sheet material and welded at the margins,
**characterized in that** the container consists of a large pure metal sheet (2) in a reusable metal easily foldable (crushable) by hand, which has a heat-weldable plastic coating (plastic skin (3)) which releases no environmentally incompatible pollutants apart from CO₂ on being burned at a temperature necessary for melting the metal and that the container is welded by means of the plastic.

2. Container according to claim 1, characterized in that the folded container has bent-in (folded-in) flaps.

3. Container according to claim 2, characterized in that the flaps (8) are welded to the container wall.

4. Container according to claim 1, characterized in that the metal is oxidizable.

5. Container according to claim 1, characterized in that the metal sheet has a thickness in »m-range.

6. Container according to claim 1 for holding foodstuffs, characterized by the use of a food-compatible container material.

7. Container according to claim 1, characterized in that the container material is gastight.

8. Container according to claim 1, characterized in that the container material is impermeable to liquid.

9. Container according to claim 1, characterized in that the metal is a metal alloy.

10. Container according to claim 9, characterized in that the metal consists of iron, chromium steel, nickel chromium steel.

11. Container according to claim 1, characterized in that the metal is ferromagnetic.

12. Container according to claim 1, characterized in that a polyolefin serves as the plastic.

13. Container according to claim 1, characterized in that a plastic based on ethylene acrylic acid serves as the plastic.

14. Container according to claim 1, characterized in that the plastic coating (3) is firmly bonded to the metal sheet (2) without a bonding agent, so that no environmentally incompatible gases apart from CO₂ escape when the material is being heated to melt the metal.

15. Container according to claim 1, characterized in that the plastic coating (3) covers the metal sheet in the basic shape for forming the container on both sides, including the outside margins.

16. Container according to claim 15, characterized in that the plastic coating (3) projects in the form of flaps at the outside margins of the metal sheet.

17. Container according to claim 1, characterized in that the container material overlapping in the formation of the container is welded inside and/or outside by thermal or high-frequency treatment.

18. Container according to claim 1, characterized in that the container sheet (2) located in the plastic coating is printed and that the plastic coating (3) is transparent.

19. Container according to claim 1, characterized in that the plastic coating is transparent and printed.

20. Container according to claim 19, characterized in that the plastic coating is transparent and printed from inside.

21. Container according to claim 2, characterized in that one of the flaps has a perforation.

22. Container according to claim 1 and claim 2, characterized in that a pierceable place is provided by material thinning in the wall of the container for the purpose of emptying the container, and that the thinned place is under a bent-in flap of the container.

23. Container according to claim 1, characterized in that an opening is provided in the container wall, which is closed with a detachable strip of material.

## Revendications

1. Récipient d'emballage possédant une stabilité intrinsèque, formé par pliage à partir d'une matière plate et soudée le long des bords, caractérisé en ce que le récipient est composé d'une tôle (2) sensiblement pure, pouvant être pliée (aplatie) à la main, faite d'un métal réutilisable, qui présente un revêtement de matière plastique pouvant être soudé à la chaleur (peau de matière plastique (3)) qui, lors de la combustion à une température qui est nécessaire pour la fusion du métal, ne dégage pas, en dehors du CO₂, de polluants susceptibles de charger l'environnement, et en ce que le récipient peut être soudé au moyen de la matière plastique.

2. Récipient selon la revendication 1, caractérisé en ce que le récipient plie présente des languettes repliées vers l'intérieur (coudées).

3. Récipient selon la revendication 2, caractérisé en ce que les languettes (8) sont soudées à la paroi du récipient.

4. Récipient selon la revendication 1, caractérisé en ce que le métal est oxydable.

5. Récipient selon la revendication 1, caractérisé en ce que la tôle possède une épaisseur de l'ordre du »m.

6. Récipient selon la revendication 1, destiné à contenir des denrées alimentaires, caractérisé par l'utilisation d'une matière de récipient du type alimentaire.

7. Récipient selon la revendication 1, caractérisé en ce que la matière du récipient est étanche aux gaz.

8. Récipient selon la revendication 1, caractérisé en ce que la matière du récipient est étanche aux liquides.

9. Récipient selon la revendication 1, caractérisé en ce que le métal est un alliage métallique.

10. Récipient selon la revendication 9, caractérisé en ce que le métal est composé de fer, d'acier au chrome, ou d'acier au nickel chrome.

11. Récipient selon la revendication 1, caractérisé en ce que le métal est magnétique.

12. Récipient selon la revendication 1, caractérisé en ce qu'on utilise une polyoléfine en tant que matière plastique.

13. Récipient selon la revendication 1, caractérisé en ce qu'on utilise comme matière plastique une matière plastique à base d'éthylène-acide acrylique.

14. Récipient selon la revendication 1, caractérisé en ce que le revêtement de matière plastique (3) est fixé solidement à la tôle (2) sans adhésif, de sorte que, lors du chauffage de la matière servant pour la fusion du métal, il ne se dégage pas de gaz nuisibles pour l'environnement, en dehors du CO₂.

15. Récipient selon la revendication 1, caractérisé en ce que le revêtement de matière plastique (3) recouvre la tôle sur les deux faces, y compris sur les bords extérieurs, dans la forme de départ pour la formation du récipient.

16. Récipient selon la revendication 15, caractérisé en ce que le revêtement de matière plastique (3) déborde aux bords extérieurs de la tôle, pour former des languettes.

17. Récipient selon la revendication 1, caractérisé en ce que la matière du récipient qui se place à recouvrement lors de la formation du récipient, est soudée intérieurement et/ou extérieurement, par voie thermique ou par haute fréquence.

18. Récipient selon la revendication 1, caractérisé en ce que la tôle (2) du récipient qui se trouve dans le récipient de matière plastique est imprimée et que le revêtement de matière plastique (3) est transparent.

19. Récipient selon la revendication 1, caractérisé en ce que le récipient de matière plastique est transparent et imprimé.

20. Récipient selon la revendication 19, caractérisé en ce que le revêtement de matière plastique est transparent et imprimé intérieurement.

21. Récipient selon la revendication 2, caractérisé en ce qu'une des languettes présente une perforation.

22. Récipient selon les revendications 1 et 2, caractérisé en ce que qu'on a formé, par amincissement de la matière, une zone transperçable dans la paroi du récipient, pour permettre de vider le récipient, et en ce que la zone amincie se trouve sous une languette repliée du récipient.

23. Récipient selon la revendication 1, caractérisé en ce qu'il est prévu dans la paroi du récipient une ouverture qui est obturée par une bande de matière pouvant être arrachée.
